# EUROPEAN PATENT APPLICATION

(11) **EP 4 712 221 A1**
(43) Date of publication of application: **18.03.2026**
(21) Application number: 25201288.5
(22) Date of filing: 10.09.2025
(51) Int. Cl.: H01M 50/105, H01M 50/129, H01M 50/178

(54) **BATTERY AND METHOD FOR MANUFACTURING THE BATTERY**

(30) Priority: 12.09.2024 EP 24200009
(71) Applicant: LG Energy Solution, Ltd., Seoul 07335 (KR)
(72) Inventor: CHOI, Jin Hyeong, 34122 Daejeon (KR)
(74) Representative: Goddar, Heinz J.

(57) **Abstract**

Disclosed is a battery, comprising battery components including an electrode assembly; an inflatable pouch case enclosing the battery components inside, the inflatable pouch case having an inner surface and an outer surface opposite to the inner surface; and at least one electrode lead electrically connected to the electrode assembly and extending through the inflatable pouch case from the inside of the inflatable pouch case to an outside of the inflatable pouch case. The outer surface of the inflatable pouch case is sealingly bonded to a surface of the at least one electrode lead.

## Description

### TECHNICAL FIELD

The present subject relates to a battery, in particular a pouch battery and a method for manufacturing the battery.

### BACKGROUND

Pouch batteries usually include an electrode assembly comprising at least one anode and one corresponding cathode. The cathode is coated with an active battery material that is generally configured to hold lithium ions, such as an LCO or LMO containing material and the anode is coated with active battery material configured to receive and store lithium ions such as a graphite containing material. The coated anode and the coated cathode are stacked upon each other and separated by a separator layer. Furthermore, pouch batteries comprise a pouch case made of an inflatable material, which envelops the electrode assembly, the separator as well as the electrolyte, wherein the remaining space inside the pouch case is filled with an electrolyte. The electrode assembly, the separator as well as the electrolyte may also be called battery components.

To charge or discharge the battery, the cathode and the anode are electrically coupled to electrode leads that protrude from the pouch case. The electrode leads are usually made of conductive material such as a metal material which is covered with a lead film, i.e. an electrically insulating material to insulate the metal. The ends of the electrode leads may protrude from the pouch case on opposite sides of the pouch case or in some examples on the same side. At least one electrode lead, in particular each of the electrode leads, electrically contacts a corresponding anode or cathode and extends from the inside of the pouch case through the pouch case to an outside of the pouch case. Therefore, the pouch case comprises through holes allowing the electrode leads to extend through the pouch case. At the through holes, an inner surface the pouch case facing the battery components is sealed with respect to electrode leads to avoid leakage of the electrolyte inside the pouch case. Therefore, the pouch case is in sealing contact with a surface of the electrode leads. The sealing contact is usually realized by attaching the inner surface of the pouch case to the surface of the electrode leads, for example via bonding.

Nevertheless, it is found that the sealing of the pouch case with respect to the electrode leads is not very reliable. In some cases, the connection of the pouch case to the electrode leads becomes leaky or may even release from the electrode leads. For example, in such cases the electrolyte inside the pouch case may escape from the pouch case or particles from the outside may reach the inside of the pouch battery. Thus, a better sealing of the pouch case is needed.

### DETAILED DESCRIPTION OF THE INVENTION

### TECHNICAL PROBLEM

It is thus an object of the present disclosure to improve the sealing of the pouch case.

However, the problem to be solved by the embodiments of the present disclosure is not limited to the above-described problem and can be variously expanded within the scope of the technical idea included in the present disclosure.

### TECHNICAL SOLUTION

The objective is solved by the claimed battery and the claimed method for manufacture thereof as well as the claimed system for manufacturing the battery.

In particular, the above objective is solved by a battery, comprising: battery components including an electrode assembly; an inflatable pouch case enclosing the battery components inside, the inflatable pouch case having an inner surface and an outer surface opposite to the inner surface; and at least one electrode lead electrically connected to the electrode assembly and extending through the inflatable pouch case from the inside of the inflatable pouch case to an outside of the inflatable pouch case. The outer surface of the inflatable pouch case is sealingly bonded to a surface of at least one electrode lead, in particular to a surface of each of the electrode leads. Battery components may for example comprise the electrode assembly, the separator and the electrolyte. A battery component may for example be the electrode assembly, the separator or the electrolyte. The electrode assembly may comprise the anode and the cathode. The anode may comprise a metal electrode that is coated with an active anode material. The cathode may comprise a metal electrode that is coated with an active cathode material. The battery may accommodate an electrode assembly having a structure in which electrodes and separators are alternately arranged. In the pouch case, the electrode assembly may be accommodated in a pouch-shaped case comprising a flexible polymer material or a laminated aluminum sheet. In order to manufacture the secondary batteries, a first electrode active material slurry may be applied to a positive electrode and/or a second electrode active material slurry may be applied to a negative electrode. The positive electrode and the negative electrode may be stacked with at least one intermediate separator to form an electrode assembly. The electrode assembly is preferably accommodated in the pouch case, and the pouch case may be sealed after an electrolyte is injected therein.

The term "sealingly bonded" may be understood as a tight bonding state between the inside and the outside of the pouch case. In particular, by sealingly bonding, a barrier between the space inside and the space outside of the pouch case can be formed, which is impenetrable for ambient air, electrolyte and/or gas. In particular, the pouch case may comprise a pouch film attached to itself, attached to the electrode leads and/or attached to another pouch film in a sealingly bonded manner such that no gas or electrolyte may escape from the space inside the pouch case and such that no ambient air may enter.

The electrode leads electrically connect the electrode assembly. Each electrode lead electrically contacts a respective electrode such as an anode of cathode. A first electrode lead may be electrically connected to an electrode of a first polarity, and a second electrode lead may be electrically connected to an electrode of a second polarity different from the first polarity. The first electrode lead may be physically connected directly to the first electrode, for example by welding. The second electrode lead may be physically connected directly to the second electrode, for example by welding. The battery may comprise one or more first electrodes. The battery may comprise one or more second electrode. The first electrode may be a cathode and the second electrode may be an anode. A positive electrode lead may be electrically connected to a positive electrode (cathode). A negative electrode lead may be electrically connected to a negative electrode (anode). An electrode lead is usually made of a core conductive metal material. The conductive metal material of the electrode lead may be covered and/or surrounded with an insulator to electrically insulate the core conductive material from the outside. The electrode leads may be used to electrically charge or discharge the battery. The electrode leads may extend from the pouch battery in the same direction. Alternatively, two or more electrode leads, in particular electrode leads of different polarity, may extend from the pouch battery in different directions, wherein the different directions may for example be oriented perpendicular to each other. Optionally, two or more electrode leads, in particular electrode leads of different polarity, may extend from the pouch battery in opposite directions.

The electrode lead may in particular have an elongated shape, wherein the length is larger than the width. The width is preferably larger than the thickness of the electrode lead. The electrode lead may in particular be comprise a flat metal sheet. The electrode lead preferably has a length in its protruding direction larger than its width crosswise with respect to the protruding direction. The length of the electrode lead which is configured to extend from the inside to the outside of the pouch case is preferably larger than the width of the electrode lead.

The battery may comprise electrode leads electrically connected to the electrode assembly and extending through the inflatable pouch case from the inside to an outside. It may be preferred that the conductive metal material of the electrode lead is covered and/or surrounded only partially, such that at least an inside end for electrically contacting the electrode is left free of the insulator. Alternatively or additionally, the conductive metal material of the electrode lead is covered and/or surrounded only partially such that at least an outside end for electrically contacting an electrical conduit, such as a busbar, an electrical source for charging the battery and/or an electrical drain to be supplied by the battery, is left free of the insulator. The insulator may be provided to cover and/or surround a portion of the electrode lead which contacts the pouch case, in particular from the inside to the outside of the pouch case. The portion of the electrode lead surrounded and/or covered by the insulator may extend along the interface between the electrode lead and the pouch film. The insulator preferably covers and surrounds the entire width and thickness of the electrode lead. The insulator may in particular extend fully circumferentially around the electrode lead along its width and length.

The pouch case can be a bag that includes the battery components inside. The battery may be a pouch battery or a pouch battery cell. The pouch case may be made of an elastic material such that it is capable to swell under the influence of a gas evolving inside the pouch case. In this context, inflatable means that the pouch case is capable of expanding under the influence of a gas evolving inside the battery. The pouch case may be made of single film or multilayer structure. The multilayers may be laminated together. The inner surface and the outer surface limit the single film or the multilayer structure on opposing sides. The pouch case may comprise a pouch film comprising, in particular consisting of, a single film or a laminated multilayer structure.

The inner surface may face an inside of the battery. The outer surface may face an outside of the battery. The inner surface and the outer surface may face in opposite directions. The inner surface and the outer surface may be parallel or substantially parallel with respect to each other. The inner surface and the outer surface may sandwich the single film or the multilayer structure in between. The inner surface of the pouch case faces the inside of the inflatable pouch case. The inner surface may face the battery components. In particular, the inner surface may face electrolyte inside the battery. The inner surface may be configured for contacting the electrolyte. In particular, the inner surface may be configured as a barrier layer, in particular as a physical and/or chemical barrier layer, for containment of the electrolyte inside of the battery. The outer surface may face the outside of the battery. The outer surface may in particular face the external environment of the battery. The outer surface may be configured as a barrier layer, in particular as a physical and/or chemical barrier layer, against external environmental effects. External environmental effects may in particular relate to liquid water, airborne humidity and oxygen.

The pouch case may be made of a layered structure (pouch film) containing a polyethylene terephthalate layer, a Nylon layer, an aluminium containing layer, and polyolefin resin layer that are stacked above each other. In particular, a first polymer layer, such as the polyethylene terephthalate layer, may constitute the outer surface. Alternatively or additionally, a second polymer layer, such as the polyolefin resin layer, may constitute the inner surface. At least one intermediate layer may be sandwiched between the first polymer layer and the second polymer layer. The at least one intermediate layer may include a metal layer, that is, a layer comprising or consisting of at least one metal material, such as aluminium. The provision of a metal layer may be advantageous as a diffusion barrier layer. Alternatively or additionally, the intermediate layer may include at least one third polymer layer. The first polymer layer and the second polymer layer may comprise, in particular consist of, different polymer materials. The third polymer layer may comprise, in particular consist of, a different polymer material in comparison to the first and/or second polymer layer. The pouch case protects and seals the battery components in the inside of the pouch case.

The pouch case may comprise one or more through holes, through which the electrode leads extend from the inside of the pouch. In this manner the electrode leads may extend through the pouch case. The pouch case may be sealed with respect to the electrode leads at the through holes. In order to seal the pouch case with respect to the electrode leads, the pouch case is in sealing contact with an outer surface of an electrode lead. The sealing contact prevents the electrolyte from penetrating from the inside of the battery to the outside of the battery. A sealing contact is realized by bonding the pouch case to the outer surface of an electrode lead. A sealing contact may thus be called a sealing bond.

A pouch case for a battery may be provided with at least one cup portion, for example through press processing a pouch film. Such a cup portion may include a bottom portion surrounded by one or more sidewalls. A cup portion or cup portions define a space in which the electrode assembly can be accommodated. The case may have lateral sections from which the bottom portion is offset by a depth. Such lateral sections may be parts of the pouch film remaining flat after the formation of the cup portion. An electrode lead may protrude through the pouch case at the lateral section or at the sidewall. Typically, some parts of the pouch film extend laterally and outwardly from the cup portion. The battery case is may be sealed along the lateral portions. In order to arrange the outer surface of the inflatable pouch case for sealingingly bonding to the electrode leads, the pouch case may be bend or folded.

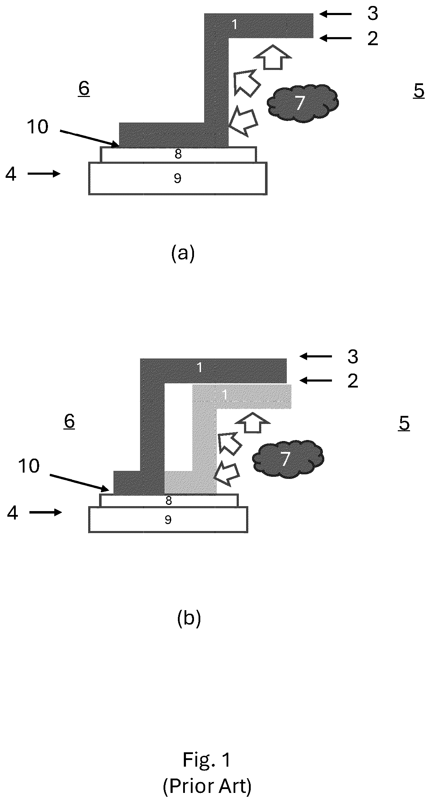

The inventors found that one reason for deteriorated sealing of the pouch case with respect to the electrode leads is caused by the so-called battery swelling. During operation in terms of charging and discharging of the battery gas mainly originating from the active materials of the electrode assembly may form inside the pouch case. The gas increases the pressure inside the pouch case such that the pouch case swells. Due to the swelling of the pouch case the sealing contact of the pouch case to the electrode leads may be deteriorated as for example shown in and described in the context of Fig. 1 below. The swelling results in a tension of the pouch case that acts upon the sealing connection of inner surface of the pouch case to the electrode leads. In other words, the tension of pouch case may result in a pulling force inducted by the pouch case acting upon the connection of the pouch case to the electrode leads. This may loosen the connection between the inner surface of the pouch case and the electrode lead. Hence, the traction of the pouch case may reduce the connecting interface between the pouch case and the surface of the electrode lead. In the worst case, the pouch case may release from the electrode leads such that the connection of the pouch case to the electrode leads becomes leaky.

In this view, the inventors suggest instead of contacting the inner surface of the pouch case to the surface of the electrode leads to sealingly bond the outer surface of the pouch case to the electrode leads. This involves a bending of the inflatable pouch case which leads to an increase of the available volume inside the pouch case. Thus, when a gas inside the pouch case evolves and battery swelling occurs, there is more space available inside the pouch case that may take up the gas. Thus, the probability that the pouch case tenses and induces a force that acts upon the sealing connection is reduced. Therefore, during conventional operation of the battery the wear out of the connection, i.e. the bonding, between the pouch case and the electrode leads is reduced and the sealing of the pouch case to the electrode is improved.

In the following further advantageous aspects of the invention will be given.

In some aspects, the inflatable pouch case may have a lateral edge which faces towards the inside of the pouch case and/or away from the outward protruding end of the electrode lead to which it is sealingly bonded. The lateral edge may face towards the inward end of the electrode lead, wherein the inward end faces the electrode assembly and may be directly coupled to the electrode assembly. The lateral edge of the pouch case may extend along one lateral edge of the pouch case. For example, in a pouch case which is folded onto itself along a fold line to form a pouch, the lateral edge may be arranged on the opposite side of the pouch case relative to the fold line. Alternatively, a lateral edge facing the inside may extend substantially perpendicular from the fold line, wherein the pouch case may comprise two opposite lateral edges, each facing inside, extending from the fold line in the same direction towards the opposite side of the pouch case. The lateral edge may be exposed to the electrolyte of the battery. In case the pouch case comprises a multilayer pouch film with an intermediate metal layer, the metal layer may be encased completely by at least one polymer layer along lateral edge. The metal layer may be covered completely by a polymer material, in particular by the first polymer material of the outer surface and/or by the second polymer material of the inner surface. In some aspects, the inflatable pouch case the inflatable pouch case is sealingly bonded to the surface of the electrode lead along a bonding length extending in the direction in which the electrode lead extends from the inside to the outside of the inflatable pouch case (protruding direction), wherein the outer surface contacts the electrode lead along most, in particular all, of the bonding length. The outer surface may face, preferably contact, the electrode lead along at least 50%, in particular at least 75%, more particularly at least 90%, of the bonding length in the protruding direction. It shall be clear that the electrode lead also extends crosswise with respect to the protruding direction, wherein the extension crosswise with respect to the protruding direction is preferably covered completely by the isolator and/or the pouch film. The extension of the electrode lead crosswise with respect to the protruding direction (width of the electrode lead) may extend parallel to the lateral edge of the pouch case. For instance, the protruding direction may be parallel to a fold line of a pouch case and the lateral edge where the electrode lead extends through the pouch case may extend perpendicular to the fold line and extend from the fold line to the opposite end of the pouch case in relation to the fold line. In another example, the protruding direction may be perpendicular to a fold line of a pouch case and the lateral edge where the electrode lead extends through the pouch case may extend parallel to the fold line and be arranged on the opposite end of the pouch case in relation to the fold line.

The pouch case may comprise a pouch film having a film thickness. The bonding length may preferably be larger than the film thickness. The bonding length may be 2 times to 100 times as large as the film thickness, in particular 5 times to 50 times as large as the film thickness. The bonding length may preferably be larger than a thickness of the electrode lead along which extends. In particular, the bonding length is 2 times to 100 times as large as the thickness of the electrode lead, in particular 5 times to 50 times as large as the thickness of the electrode lead.

Area where the outer surface is sealingly bonded to the surface of the electrode lead may be labeled a bonding area. The bonding area may define an area having a length (bonding length) in the direction in which the electrode lead protrudes from the inside to the outside of the pouch case and a width (bonding width) perpendicular to the direction in which the electrode lead protrudes from the inside to the outside of the pouch case. In the bonding area, the electrode lead may have at least one surface sealingly bonded to the outer surface of the pouch case. Preferably, the electrode lead has two opposite surfaces sealingly bonded to two opposite portions of the outer surface of the pouch case, in particular two portions of the outer surface arranged opposite from each other in relation to a fold line of the pouch case. The electrode lead may be completely covered and/or surrounded by the insulator in the entire bonding area. The pouch case may be bend and/or folded over itself in the projection space of the bonding area.

The inflatable pouch case may in particular be folded onto itself. The pouch case may be folded onto itself so that the pouch film is arranged twice above the projection of the bonding area. The inflatable pouch case may be folded onto itself such that, in a first section of the pouch film which terminates at the lateral edge, the outer surface is sealingly bonded to the electrode lead, and in a second section of the pouch film immediately adjacent to the first section, the outer surface faces away from the electrode lead, wherein the inner surfaces in the first section faces the inner surface of the second section.

In some aspects, the inflatable pouch case is folded such that the outer surface of the inflatable pouch case is in contact with the surface of each of the one or more electrode leads. The folding induces the above bending while keeping the extension of the folded pouch case low. Hence, the claimed battery may show the positive effects of an improved sealing connection while keeping a low extension. As compared to bending, folding leads to a sharper transition. The folded pouch case may thus have a defined folding edge.

In particular, the pouch case may have a hemmed edge where the outer surface is sealingly bonded to a surface of the at least one electrode lead. The inflatable pouch case may be bend or folded so as to form a hemmed edge (which may alternatively be referred to as a folded hem). The outer surface may be sealingly bonded to the surface of the electrode lead at the hemmed edge.

Furthermore, in the inflatable pouch case which is bend or folded onto itself so that the outer surface is bonded to the electrode lead, any pressure of gas inside the pouch case presses the pouch film against the electrode lead in the bonding area. Thereby, the pouch case according to the present disclosure has a substantially increased resistance against inadvertent leakage due to overpressure. This improved resistance is assumed to be because the pressure increases the holding force between the pouch film and the electrode lead, rather than decreasing it. In comparison, in conventional pouch cases, the inner surface of the pouch case is bonded to the electrode lead, so that the pressure of gas acting on the inner surface may easily peel or tear the pouch film from the electrode lead.

In some further aspects, the inflatable pouch case has a U-shaped portion such that the outer surface of the inflatable pouch case is in contact with the surface of each of the one or more electrode leads. The U-shaped portion of the pouch case, when expanded, may provide for additional space inside the pouch case that can take up evolving gas. In some further aspects, in the U-shaped portion one part of the inner surface faces another part of the inner surface. Thus, an additional space is provided in between the one part of the inner surface and the opposing other part of the inner surface. When the pouch case expands under the influence of a gas pressure this additional space may take up the evolving gas. In some aspects, the electrode leads each comprise an insulating film constituting the surface of each of the one or more electrode leads. Hence, the conductive material, such as a metal of an electrode lead is electrically insulated, in particular with respect to the pouch case. The insulating film is preferably selected from any one of polyimide, polypropylene, polyethylene, polyethylene terephthalate, polyvinyl chloride, and/or high-density polyethylene. These materials have been found to provide sufficient insulating characteristics while being capable to melt under the influence of heat so as to realize a sealing contact to the material that constitutes the inner surface of a pouch case.

In some aspects, the inflatable pouch case comprises a first polymer layer that constitutes the outer surface of the inflatable pouch case, wherein the first polymer layer is preferably made of nylon resin or polyethylene terephthalate. The first polymer layer is the outermost layer of the pouch case and serves to protect the battery from external friction and impact, while electrically insulating the battery and the battery components from the outside. Here, the outermost layer refers to the direction facing outward, opposite to the direction where the electrode assembly is located. Polymers like nylon resin or polyethylene terephthalate (PET), may have a wear resistance and heat resistance, while still being able to form a connection to the outer surface of the electrode leads under the influence of heat and pressure. The first polymer layer can have a single-layer structure made of one material or a composite film structure formed by two or more materials forming the first polymer layer.

In some aspects, the inflatable pouch case comprises a second polymer layer that constitutes the inner surface of the inflatable pouch case, wherein the second polymer layer is preferably made of polyolefin resin such as polypropylene or polyethylene. Polyolefin resins such as polypropylene or polyethylene have excellent mechanical properties such as tensile strength, rigidity, surface hardness, wear resistance, and heat resistance, as well as its chemical properties like corrosion resistance. Moreover, the second polymer layer may be composed of coated polypropylene or polypropylene-butylene-ethylene terpolymer. Additionally, the second polymer layer can have a single-layer structure made of one material or a composite film structure formed by two or more materials forming the second polymer layer.

Alternatively or additionally, The sealing bond between the outside surface and the electrode lead may be formed as a material bond. The sealing bond between the outside surface and the electrode lead may be formed by heat. The outer surface and/or the electrode lead may be heated above the glass transition temperature of the polymer material of the outer surface and/or above the melting temperature of the polymer material of the outer surface such that the outer surface softens, in particular melts, for forming a material bond between the pouch film and the electrode lead. The outer surface and/or the electrode lead may be softened, in particular melted at least partially, for forming a material connection between the insulator surrounding the electrode lead and the pouch film. At least one of the insulator and the outer surface may be softened or melted for forming a material connection. A material connection between the electrode lead and the pouch case may form a mechanically stable and air-tight bond.

In some embodiments of the battery, which may be combined with the aforementioned ones, the pouch case is single-piece element which may integrally include an accommodation portion. In particular, the pouch case may comprise or consist of a pouch-film.

The pouch film may have a laminate structure comprising, for example, a metal film and one or more synthetic material layers. For example, the metal film may be made of aluminum (Al), iron (Fe), copper (Cu), chrome (Cr), manganese (Mn), nickel (Ni), magnesium (Mg), zinc (Zn) or a combination or an alloy thereof. For example, the one synthetic material layer, or each of the synthetic material layers, may be made of or contain polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene, benzobisoxazole, polyarylate, Teflon, glass fiber or a combination thereof. The pouch film has a film thickness. The film thickness is preferably constant and/or continuous. The pouch film has a first surface, which in particular is configured for acting as an inner surface of battery case, and a second surface, which in particular is configured for acting as an outer surface of the battery case. The first surface may be in engagement with the electrode assembly be placed within the battery case. The second surface may face away from the electrode assembly and optionally be in engagement with the environment surrounding the secondary battery.

The pouch film may have a pouch film thickness of 100 µm to 250 µm, in particular 160 µm to 200 µm, preferably 175 µm to 190 µm. Preferably, the pouch film includes a gas barrier layer which is made of metal. The metal of the gas barrier layer of the pouch film preferably comprises or consists of aluminum and/or an alloy containing aluminum, particularly including an alloy no. AA80XX series aluminum alloy. The alloy no. of the aluminum alloy may be AA8021. The aluminum alloy may include about 1.3 wt% to about 1.7 wt% of iron and about 0.2 wt% or less of silicon, and may have a grain size of about 10 µm to about 13 µm. The thickness of the gas barrier layer may be 30 µm to 150 µm, in particular 70 µm to 120 µm, preferably 80 µm to 100 µm. The pouch film may further include a sealant layer made of a first polymer, preferably formed as an innermost layer. The thickness of the sealant layer may be 60 µm to 100 µm. Additionally or alternatively, the pouch film may include a surface protection layer made of a second polymer, preferably formed as an outermost layer. The first polymer may be the same as the second polymer or different from the second polymer. In particular, the gas barrier layer is stacked between the surface protection layer and the sealant layer. The pouch film may further include a drawing assistance layer which is made of a third polymer. The third polymer may be the same as or different from the first and/or second polymer. The drawing assistance layer may be stacked between the surface protection layer and the gas barrier layer. A thickness of the drawing assistance layer may be 10 µm to 75 µm, particularly 20 µm to 50 µm.

The first polymer may be made of one or more materials selected from the group consisting of polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. In particular, polyolefin-based resin such as polypropylene (PP) or polyethylene (PE) may be a main component in the first polymer. Polypropylene (PP) may provide excellent mechanical properties including tensile strength, rigidity, surface hardness, wear resistance, and thermal resistance, and excellent chemical properties including corrosion resistance and therefore be selected as a main component of the sealant layer.

The second polymer may be made of one or more from polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. It may be advantageous to mainly use a polymer having a desirable wear resistance and thermal resistance, such as polyethylene terephthalate (PET).

The third polymer may be made of one or more from polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. Particularly, a nylon resin may be easily bonded to the polyethylene terephthalate (PET) of the surface protection layer and may exhibit a similar behavior to the aluminum alloy of the moisture barrier layer during and after a drawing process. Thus, a nylon resin may be used as main component of the third polymer.

The present disclosure may also relate to a battery module comprising at least two, preferably multiple batteries. In particular, the battery module may comprise several batteries stacked in a stacking direction.

Furthermore, the present disclosure relates to an electric vehicle comprising at least one or more batteries according to the present disclosure. An electric vehicle may comprise one or more battery modules, each including two or more batteries, in particular two or more batteries, according to the present disclosure.

Moreover, the above objective is solved by a method for manufacturing a battery, the method comprising: Enclosing battery components including an electrode assembly inside an inflatable pouch case, wherein the inflatable pouch case has an inner surface, in particular facing the battery components, and an outer surface opposite to the inner surface, and wherein electrode leads electrically connected to the electrode assembly extend through the inflatable pouch case from an inside of the inflatable pouch case to an outside of the inflatable pouch case. The method is particularly characterized by bonding the outer surface of the inflatable pouch case to a surface of at least one electrode lead, in particular each of the electrode leads, of the inflatable pouch case. In this manner, the above-described battery can be manufactured that shows improved sealing characteristics.

A battery may be manufactured by the battery manufacturing method as disclosed herein. The battery manufacturing method may be implemented to manufacture the battery or battery module as disclosed herein.

In some aspects, bonding the outer surface of the inflatable pouch case to a surface of each of the electrode leads comprises: heating the outer surface of the inflatable pouch case and the surfaces of the electrode leads; and pressing the heated outer surface of the inflatable pouch case against the heated surfaces of the electrode leads. Due to the heating the materials of the outer surface and of the surfaces of the electrode leads can be at least partly molten. By pressing the at least partly molten materials of said surfaces against each other a rigid and sealing connection of the pouch case to the electrode leads may be established.

In some aspects, bonding the outer surface of the inflatable pouch case to a surface of each of the electrode leads further comprises: bending, in particular folding, the inflatable pouch case such that the outer surface of the inflatable pouch case faces the surface of at least one of the electrode leads; placing a heat source between the outer surface of the inflatable pouch case and the surface of the electrode lead; and pressing the bent pouch case against the electrode leads such that the outer surface of the inflatable pouch case is bonded to the surface of the electrode lead. In this manner, the outer surface of the inflatable pouch case can be time efficiently bonded to the surface of the electrode leads. Also, it can be avoided that the heated surfaces cool before the pressing action, which may deteriorate the connection.

In some aspects, the heating is performed by applying electromagnetic waves, in particular infrared light. The application of electromagnetic waves is easy to implement since it does not require a direct connection. Furthermore, applying electromagnetic waves for the heating may be spatially focused on selected areas, without heating further components of the battery.

In some aspect, the pressing is performed for about 2-3 seconds. The pressing time has been found a considerable parameter to influence the quality of the connection via bonding. In said range a high quality of the connection can be realized.

Furthermore, the above objective is solved by a battery manufacturing system being configured to perform the steps of the previous method for fabrication of a battery. Such manufacturing system is capable of manufacturing the claimed battery, which solves the above objective.

The manufacturing system may comprise at least one holding device for holding the at least one electrode lead and at least one handling device for handling the pouch case. Additionally, the manufacturing system may comprise a device configured for injecting the electrolyte into the inside of the battery. Optionally, the manufacturing system may comprise at least one heating device for heating the outer surface of a section of the pouch case and/or the electrode lead. The system may comprise a heating device for heating both the outer surface and the electrode lead. Alternatively, a first heating device may be provided for heating the outer surface above the glass-transition temperature, in particular above the melting temperature, of the outer surface of the pouch case. Alternatively or additionally, a second heating device may be provided for heating the electrode lead above the glass-transition temperature, in particular above the melting temperature, of the outer surface of the pouch case. Further optionally, the manufacturing system may comprise at least one pressing block for pressing the pouch case onto the electrode lead.

Herein, the term "battery" may be used in accordance with the teachings of electrochemical energy storage. The battery may refer to a primary battery and/or a secondary battery. Specifically, a battery as used herein may indicate a product that is configured to store chemical energy and enables a conversion of the stored chemical energy into electrical energy. In some examples, the battery may explicitly refer to a secondary battery that is rechargeable.

The electrode assembly as disclosed herein may refer to a stack of layers comprising one or more positive electrodes, one or more separators, and one or more negative electrodes in an alternating manner. The electrode assembly may have a rectangular shape in a plan view. The plan view may refer to a view direction perpendicular to the layers (i.e., the entirety of the electrodes and separator(s)) of the electrode assembly. In a rectangular shape, two opposite sides are of equal length and parallel to each other.

A stacked electrode assembly may be classified based on the structure in which its positive electrode sheet or sheets (cathode) and its negative electrode sheet or sheets (anode) are stacked with at least one separator being interposed therebetween. For example, there may be a stacked (laminated) type structure in which pluralities of cathodes and anodes, cut into predetermined unit sizes, are sequentially stacked with separators being interposed between the cathodes and the anodes, or the like. Alternatively, there may be a stacked/folded type electrode assembly, which is a combination of the jelly-roll type electrode assembly and the stacked type electrode assembly. Such a stacked/folded type electrode assembly may also be referred to as a stacked electrode assembly.

The electrode assembly may comprise an electrode lead. The electrode lead of the electrode assembly accommodated in the case, which may be a pouch-type case, may protrude from the case to the outside so as to supply electricity to the outside of the secondary battery. The electrode assembly may further comprise a plurality of electrode leads. For example, the electrode assembly may comprise two electrode leads. One of the two electrode leads may be connected to the positive electrode and another one of the two electrode leads may be connected to the negative electrode. In an example, the electrode lead connected to the positive electrode and the electrode lead connected to the negative electrode may protrude in the longitudinal direction outside of the case opposite to each other. However, the present invention is not limited thereto, and the electrode lead connected to the positive electrode and the electrode lead connected to the negative electrode may protrude in the same direction in parallel with each other.

### ADVANTAGEOUS EFFECTS

The claimed subjects, provide for a battery, in particular a pouch battery with improved sealing characteristics. The inventors found that the so-called battery swelling of the pouch case may deteriorate the sealing connecting of the inflatable pouch case with the electrode leads, which may induce leakage of the battery. This may be at least partly overcome by bonding the outer surface of the inflatable pouch case which increases the available space inside the inflatable pouch case that can take up gas evolving during battery swelling. Therefore, the probability that the inflatable pouch case tenses under the influence of battery swelling is reduced, which generally reduces the influence of battery swelling onto the connection between the pouch case and the electrode leads.

### BRIEF DESCRIPTION OF THE DRAWINGS

FIG. 1 (a) and (b) sketch the affection of battery swelling onto the connection of the pouch case to the electrode leads according to the prior art.
FIG. 2 (a) and (b) sketch the affection of battery swelling onto the connection of the pouch case to the electrode leads according to one specific embodiment of the present disclosure.
Fig. 3 (a), (b) and Fig. 4 (a), (b) sketch the steps of a method for manufacturing a battery according to one specific embodiment of the present disclosure.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description. Reference signs in the figures may refer to the same entities.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Pouch batteries usually include battery components that are sealingly enveloped by a pouch case 1. The pouch case 1 can be made of an elastic material. Generally, the pouch case 1 is inflatable to take into account for battery swelling.

The battery components may comprise an electrode assembly including at least one anode and one corresponding cathode, a separator as well as an electrolyte. The cathode is usually coated with an active battery material that is generally configured to hold lithium ions, such as an LCO or LMO containing material and the anode is coated with active battery material configured to receive and store lithium ions such as a graphite containing material. The coated anode and the coated cathode are stacked upon each other and separated by a separator layer. Furthermore, pouch batteries comprise a preferably liquid electrolyte that fills the remaining space inside the pouch case 1.

Moreover, a pouch battery comprises electrode leads 4 electrically connected to the electrode assembly, i.e. to a corresponding one of the cathode and the anode, and extending through the inflatable pouch case 1 from an inside 5 of the inflatable pouch case 1 to an outside 6 of the inflatable pouch case 1.

Figure 1(a) sketches a sealing connection of the inflatable pouch case 1 to one of the electrode leads 4 according to the prior art. The electrode lead 4 extends from an inside 5 to an outside 6 of the inflatable pouch case 1. The inflatable pouch case 1 comprises an inner surface 2 that faces the electrode assembly in the inside 5 of the pouch case 1. Furthermore, the inflatable pouch case 1 comprises an outer surface 3 that faces the outside 6 of the pouch case 1. The inner surface 2 and the outer surface 3 limit the inflatable pouch case 1 on opposite sides. In other words, the inner surface 2 and the outer surface 3 constitute outer margins of the inflatable pouch case 1. In some cases, the outer surface 3 and the inner surface 2 run substantially in parallel to each other.

According to the prior art the inner surface 2 is sealingly bonded, i.e. is in sealing connection, with the surface of the electrode lead 4. The lateral edge of the pouch case faces towards the outside 6 and towards the outward protruding end of the electrode lead. The interface between the inner surface 2 of the pouch case 1 and the surface of the electrode lead 4 can be called a sealing section 10. In some cases, the electrode lead 4 comprises a lead metal 9 that is covered with an insulating film 8. In these cases, the inner surface 2 of the inflatable pouch case 1 is directly bonded to the surface of the insulating film 8.

As indicated in Figure 1 (a) and (b), during operation of the battery gas 7 may evolve in the inside 5 of the pouch case 1. The formation of gas 7 inside the pouch case 1 increases the pressure (indicated by arrows) that acts upon the pouch case 1. Hence, the pouch case 1 swells, which is generally known as battery swelling. The swelling leads to a tension of the pouch case 1. The tension of the pouch case 1 induces a pulling force acting upon the connection between the inner surface 2 of the pouch case 1 and the surface of the electrode lead 4. Hence, as shown in Figure 1 (b), the pulling force loosens the bonding, i.e. the connection, between the inner surface 2 and the surface of the electrode lead 4. Thus, the inflatable pouch case 1 rips off from the electrode lead 4 which reduces the area of the sealing section 10. In the worst case the sealing of the inflatable pouch case 1 is broken such that the electrolyte in the inside 5 of the inflatable pouch case 1 leaks out.

More specifically, the pressure acts on the inner surface of the pouch case which is the same surface that is sealingly bonded to the electrode lead. The pressure force thus acts in the direction in which the pouch case may be lifted and removed from the electrode lead. Especially in case of repeated cycles of pressure building up inside of the pouch case, the pressure force may peel the pouch film from the electrode lead.

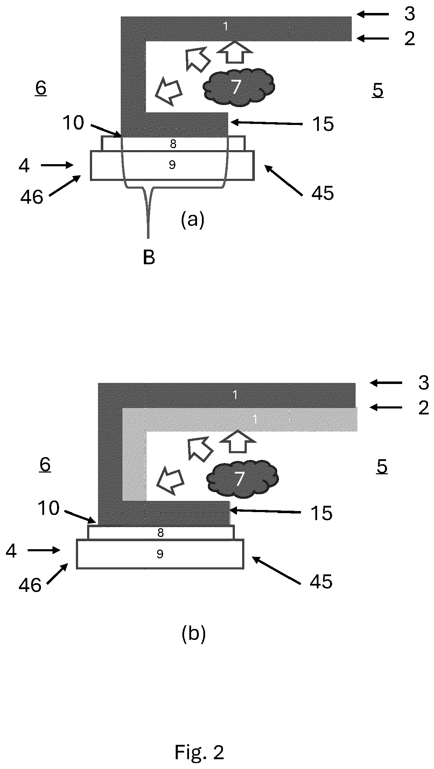

Figure 2 (a) and (b) show the connection of the inflatable pouch case 1 according to the present disclosure. The reference signs in the figures refer to the same entities as in Fig. 1. The disclosure shown in Fig. 2 is substantially based on Fig. 1 with the main difference in the connection of the inflatable pouch case 1 to the electrode lead 4.

According to the present disclosure, the outer surface 3 of the inflatable pouch case 1 is bonded to the surface of the electrode lead 4.

In the pouch case 1 of the present disclosure, gas pressure acting inside of the pouch case thus pushes the pouch film against the electrode lead in the bonding area. Thus, gas pressure inside of the pouch case does not lift the pouch film from the electrode lead in the bonding area, thereby significantly reducing the likelihood that gas buildup may eventually peel the pouch case from the electrode lead.

The pouch case may comprise a pouch film. The pouch film may consist of a singular film or comprise two or more layers, for example consist of three layers or four layers. The pouch film 1 may in particular comprise a first polymer layer forming the outer surface 3 and a second polymer layer forming the inner surface 2. The pouch film 1 may optionally comprise one or more intermediate layers, such as third polymer layer and/or a metal layer.

The pouch case 1 may be formed by sealing the inside 5 from the outside 6. In order to seal the inside 5 from the outside 6, a first section (top section) of the pouch case 1 and a second section (bottom section) of the pouch case 1 may be sealingly bonded to each other. Electrode leads 4 may protrude from the inside 5 to the outside 6 of the pouch case 1.

An electrode lead 4 may for example be a plate-like component having a core conductive material. The electrode lead 4 may for example be an elongate metal sheet having a predefined length, width and thickness. The length of the electrode lead 4 extends from an inward end 45 to an outward end 46 in a protrusion direction in which the electrode lead 4 extends through the pouch case. The width of the electrode lead may extend perpendicular to the protrusion direction. The predefined length of the electrode lead is preferably larger than its width. The electrode lead 4 may have a thickness smaller than its width and its length. The electrode width may extend between its first (upper) surface and its second (lower) surface.

The pouch case 1 may be sealingly bonded on the one side to the first surface of the electrode lead 4 and on the other side to its second surface (not shown). A first section of the pouch case 1 may be sealingly bonded to the first surface of the electrode lead 4. A second section of the pouch case may be sealingly bonded to the second surface thereof (not shown). The isolating film 8 may cover and surround the electrode lead 4 circumferentially along the thickness direction and along the width direction.

The pouch case 1 may be sealingly bonded to the electrode lead 4 along most or all of the bonding length B. Along most or all of the bonding length B, the outer surface 3 of the pouch case 1 may be sealingly bonded to the electrode lead 4. In particular, a first polymer on the outer surface 3 of the pouch case may be bonded in a material connection to the insulating film 8 surrounding and covering the lead metal 9 of the electrode lead 4.

The pouch case 1 may terminate in an inward facing lateral edge 15. The lateral edge 15 may face towards the electrode assembly and/or the inward end 45. The lateral edge 15 preferably faces away from the outward end 46 of the electrode lead 4. The pouch case 1 may include a hemmed edge where the pouch film is folded onto itself such that adjacent sections of the inner surface face each other, wherein a first section of the outer surface 3 faces the electrode lead 4 and is sealingly bonded thereto whereas a second section of the outer surface 3 faces away from the electrode lead 4.

As be taken from Figure 2(a), the inflatable pouch case 1 is bent by about 180° such that the outer surface 3 is sealingly bonded to the surface of the electrode lead 4. In other words, the inflatable pouch case 1 may have a U-shaped portion such that the outer surface 3 contacts the surface of the electrode lead 4.

Hence, the inside 5 of inflatable pouch case 1 may have in increased volume capacity with respect the pouch case of the prior art. Thus, the battery of the present disclosure is capable of taking up in increased amount of gas 7 inside the inflatable pouch case 1 before starting to swell.

As shown in Figure 2 (b), when a gas 7 evolves in the inside 5 of the inflatable pouch case 1, the inflatable pouch case 1 can take up more gas 7 before starting to tense. Therefore, during operation of the battery, the inflatable pouch case 1 tenses less or at least fewer times as compared to the prior art. Therefore, the bonding between the inflatable pouch case 1 and the electrode lead 4 is less stressed. Thus, the sealing section 10 between the outer surface 3 and the surface of the electrode lead 4 remains intact. Thus, according to the present disclosure, the sealing of the battery is improved.

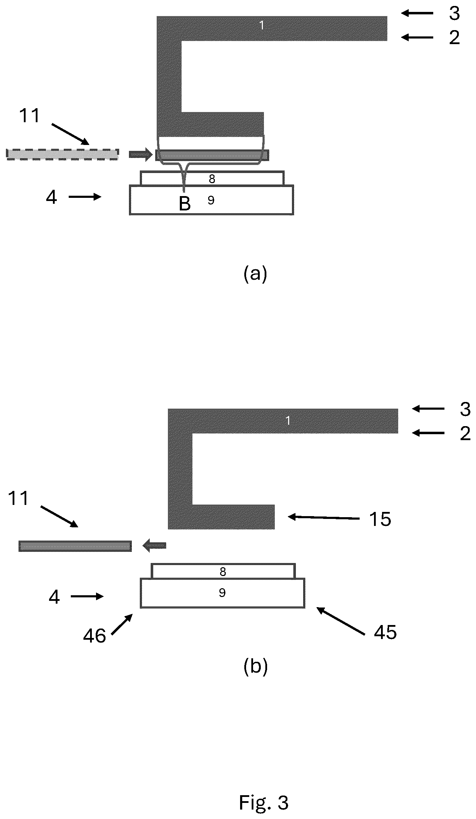

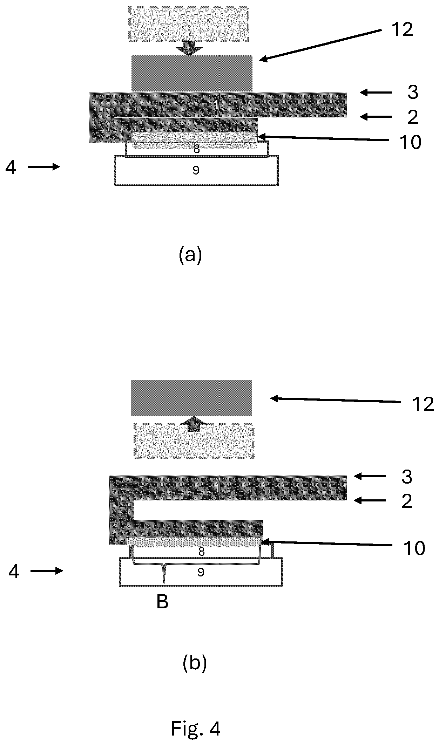

Figs. 3 and Figs. 4 exemplary illustrates the steps of a method for manufacturing a battery according to the present disclosure.

Figure 3 (a) illustrates the first step of the method for manufacturing a battery. Accordingly, the inflatable pouch case 1 is bent such that the outer surface 3 of a portion of the inflatable pouch case 1 faces the surface of the electrode lead 4. A heat source 11 such as an infrared source is inserted in a space between the opposing outer surface 3 and the surface of the electrode lead 4.

The heat source 11 may apply heat to the outer surface 3 and to the surface of the electrode lead 4, preferably simultaneously. Due to the heating of the outer surface 3 and the surface of the electrode lead 4, the materials thereof may be at least partly molten. Nevertheless, also other solutions are conceivable such as a separated heating of the portion of the outer surface 3 and the surface of the electrode lead 4, wherein the inflatable pouch case 1 is bent thereafter.

As shown in figure 3(b), the heat source 11 is removed from the space between the outer surface 3 and surface of the electrode lead 4. The heat source may be removed e.g. by lateral movement.

According to figure 4 (a), via a pressing block 12 the heated outer surface 3 is pressed against the heated surface of the electrode lead 4.

As shown in figure 4 (b) the pressure is released by withdrawing the pressing block 12. In this manner, the outer surface 3 of the inflatable pouch case 1 is sealingly bonded to the surface of the electrode lead 4. The bond constitutes a sealing connection between the outer surface 3 of the inflatable pouch case 1 and the surface of the electrode lead 4. In particular, the outer surface 3 of the inflatable pouch case is directly bonded to the surface of the electrode lead 4. In some cases, the outer surface 3 of the inflatable pouch case 1 is directly bonded to the surface of insulating film 8 covering the lead metal 9 of the electrode lead 4. Thus, a direct connection between the outer surface 3 and the surface of the electrode lead 4 is established. In particular, by sealingly bonding the outer surface 3 of the inflatable pouch case 1 to the surface of the electrode lead 4, a barrier is formed between the space inside 5 and the space outside 6 of the pouch case, which is impenetrable for ambient air, electrolyte and/or gas. Thus, ambient air, electrolyte and/or gas cannot leak along the bonding area where the outer surface 3 of the inflatable pouch case 1 is sealingly bonded to the surface of the electrode lead 4.

The pouch case 1 may be sealingly bonded to itself and to the electrode lead 4 along an edge of the pouch case 1. The pouch case 1 may be sealingly bonded to an electrode lead 4 in a bonding area. The bonding area may extend in a bonding length B in the direction in which the electrode lead 4 extends from the inside 5 to the outside 6 of the pouch case (protruding direction). Crosswise from the protruding direction, the bonding area may extend in a bonding width. The bonding length B is less than the length of the electrode lead 4. Thus, an outward end 45 of the electrode lead 4 is arranged on the outside 6 of the pouch case and may for example be electrically coupled to a busbar or an electronic consumer. Furthermore, the inward end 45 of the electrode lead 4 is arranged on the inside 5 of the pouch case so that it may be electrically coupled to the electrode assembly.

The battery 1 may include at least one first electrode lead 4 and at least one second electrode lead, wherein the first and second leads have different polarities. The first electrode lead may be directly coupled to a positive electrode of the electrode assembly and the at least one second electrode lead may be directly coupled to a negative electrode of the electrode assembly. The first and second electrode leads may be arranged on the same edge of the pouch case, or on different edges thereof, in particular on opposite edges.

Adjacent to the bonding area, the pouch case may be sealingly bonded to itself. In particular, the outer surface of a first section of the pouch case may be sealingly bonded to the outer surface of second section of the pouch case. The pouch case may be separated into two sections, for example by a fold line. The first section of the pouch case may be folded onto the second section of the pouch case along the fold line. The first section and/or the second section of the pouch case may comprise a cup portion. The first section of the pouch case may comprise a first cup portion. The second section of the pouch case may comprise a second cup portion. The pouch case may comprise an accommodation portion for the electrode assembly defined between the first section and the second section, in particular defined by the first cup portion and/or the second cup portion.

In some instances, at least one electrode lead may protrude from the inside 5 to the outside 6 of the pouch case 1 in a direction parallel to the fold line. Alternatively or additionally, at least one electrode lead may protrude from the inside 5 to the outside 6 of the pouch case 1 in a direction perpendicular to the fold line. It may be preferred the first electrode lead and the second electrode lead are arranged in parallel. In some embodiments, the first electrode lead and the second electrode lead are arranged in parallel to each other and protrude through the same edge of the pouch case, in particular parallel to the fold line or perpendicular to the fold line. In some embodiments, the first electrode lead and the second electrode lead are arranged in parallel to each other and protrude through the opposite edges of the pouch case, preferably parallel to the fold line.

### DESCRIPTION OF REFERENCE NUMERALS

- 1: pouch case
- 2: inner surface
- 3: outer surface
- 4: electrode lead
- 5: inside
- 6: outside
- 7: gas
- 8: insulating film
- 9: metal
- 10: sealing section
- 11: heat source
- 12: pressing block
- 15: lateral edge
- 45: inward end
- 46: outward end
- B: bonding length

## Claims

1. A battery, comprising:
battery components including an electrode assembly;
an inflatable pouch case (1) enclosing the battery components inside (5), the inflatable pouch case (1) having an inner surface (2) and an outer surface (3) opposite to the inner surface (2); and
at least one electrode lead (4) electrically connected to the electrode assembly and extending through the inflatable pouch case (1) from the inside (5) of the inflatable pouch case (1) to an outside (5) of the inflatable pouch case (1);
wherein
the outer surface (3) of the inflatable pouch case (1) is sealingly bonded to a surface of the at least one electrode lead (4).

2. The battery according to claim 1, wherein the pouch case (1) has a lateral edge (15) which faces towards the inside (5) of the pouch case (1).

3. The battery according to claim 1 or 2, wherein the inflatable pouch case (1) is sealingly bonded to the surface of the electrode lead (4) along a bonding length (B) extending in the direction in which the electrode lead (4) extends from the inside (5) to the outside (6) of the inflatable pouch case,
wherein the outer surface (3) faces the electrode lead (4) along most of the bonding length (B).

4. The battery according to one of the preceding claims, wherein the pouch case (1) has a hemmed edge where the outer surface (3) is sealingly bonded to the surface of the at least one electrode lead (4).

5. The battery according to one of the preceding claims, wherein the inflatable pouch case (1) is folded such that the outer surface (3) of the inflatable pouch case (1) is in contact with the surface of each of the one or more electrode leads (4).

6. The battery according to any one of the preceding claims, wherein the inflatable pouch case (1) has a U-shaped portion such that the outer surface (3) of the inflatable pouch case (1) is in contact with the surface of each of the electrode leads (4).

7. The battery according to any one of the preceding claims, wherein inflatable pouch case (1) comprises a first polymer layer that constitutes the outer surface (3) of the inflatable pouch case (1), , and wherein the inflatable pouch case (1) comprises a second polymer layer that constitutes the inner surface (2) of the inflatable pouch case (1).

8. The battery according to any one of the preceding claims, wherein the sealing bond between the outer surface (3) and the electrode lead (4) is formed as a material bond.

9. A method for manufacturing a battery, the method comprising:
enclosing battery components including an electrode assembly inside (5) an inflatable pouch case (1),
wherein the inflatable pouch case (1) has an inner surface (2) and an outer surface (3) opposite to the inner surface (2), and
wherein at least one electrode lead (4) electrically connected to the electrode assembly extends through the inflatable pouch case (1) from the inside (5) of the inflatable pouch case (1) to an outside (5) of the inflatable pouch case (1);
wherein bonding the outer surface (3) of the inflatable pouch case (1) to a surface of the at least one electrode lead (4) of the inflatable pouch case (1).

10. The method according to claim 9, wherein a lateral edge (15) of the pouch case (1) is arranged to face towards the inside (5) of the pouch case (1).

11. The method according to claim 9 or 10, wherein the inflatable pouch case (1) is sealingly bonded to the surface of the electrode lead (4) along a bonding length (B) extending in the direction in which the electrode lead (4) extends from the inside (5) to the outside (6) of the inflatable pouch case,
wherein the outer surface (3) faces the electrode lead (4) along most of the bonding length (B).

12. The method according to one of the claims 9 to 11, wherein bonding the outer surface (3) of the inflatable pouch case (1) to a surface of each of the electrode leads (4) comprises:
heating at least one of the outer surface (3) of the inflatable pouch case and the surface of the electrode lead (4); and
pressing the outer surface (3) of the inflatable pouch case (1) against the surface of the electrode leads (4).

13. The method according to any one of the claims 9 to 12, wherein bonding the outer surface (3) of the inflatable pouch case (1) to a surface of each of the electrode leads (4) further comprises:
bending, in particular folding, the inflatable pouch case (1) such that the outer surface (3) of the inflatable pouch case (1) faces the surface of at least one of the electrode leads (4);
placing a heat source (11) facing at least one of the outer surface (3) of the inflatable pouch case and the surface of the electrode lead (4); and
pressing the bent pouch case (1) against the electrode leads (4) such that the outer surface (3) of the inflatable pouch case (1) is bonded to the surface of the electrode lead (4).

14. The method according to any one of the claims 9 to13, wherein the heating is performed by applying electromagnetic waves, in particular infrared light.

15. The method according to any one of the claims 12 to 14, wherein the pressing is performed for about 2-3 seconds.

16. A battery manufacturing system, the battery manufacturing system being configured to perform the method of any one of claims 9 to 15.
